# EUROPÄISCHE PATENTSCHRIFT

(11) **EP 2 470 409 B1**
(45) Veröffentlichungstag und Bekanntmachung des Hinweises auf die Patenterteilung: **11.06.2014**
(21) Anmeldenummer: 10757732.2
(22) Anmeldetag: 15.09.2010
(51) Int. Cl.: B62B 3/02, B62B 3/04, B62B 3/10, B62B 5/00

(54) **TRANSPORTROLLER**
TROLLEY
PLATEAU DE TRANSPORT ROULANT

(30) Priorität: 24.12.2009 DE 102009060631
(43) Veröffentlichungstag der Anmeldung: 04.07.2012
(73) Patentinhaber: Schoeller Arca Systems GmbH, 19057 Schwerin (DE)
(72) Erfinder: ORSET, Olivier, 01150 Sainte Julie (FR); KELLERER, Richard, 85622 Feldkirchen (DE)
(74) Vertreter: Bockhorni & Kollegen
(86) Internationale Anmeldenummer: PCT/EP2010/005673
(87) Internationale Veröffentlichungsnummer: WO 2011/076300

(56) Entgegenhaltungen:
- FR-A1- 2 826 330
- JP-A- 2006 298 343
- US-A- 5 110 147
- US-A1- 2002 074 754
- US-B1- 6 659 495

## Beschreibung

Die Erfindung betrifft einen Transportroller zum Transport und zur Lagerung von Transportbehältern und anderem Transportgut.

Derartige Transportroller, auch Dolly genannt, umfassen eine Plattform mit einer Transportfläche und auf der Unterseite der Plattform im Eckbereich angeordnete Räder. Die Transportroller dienen vornehmlich dazu, mit Gütern unterschiedlichster Art gefüllte Behälter, wie Container, Kisten, Kästen oder Kartonverpackungen und dergleichen etwa in Verkaufs- und Lagerstätten zu transportieren. Üblicherweise werden auf diesen Transportrollern mehrere Behälter für den Transport auf- bzw. übereinander gestapelt, um die mit Lebensmitteln oder sonstigen Gebrauchsgütern gefüllten Behälter vom LKW zum Lagerort zu transportieren.

Beim Transport der Behälter besteht allerdings die Gefahr, dass während des Verfahrens des Dollys aufgrund ruckartiger Bewegungen oder stoßbedingt die Behälter aufgrund zu geringen Halts verrutschen oder herabfallen können. Dies ist insbesondere häufig dann der Fall, wenn Unebenheiten am Boden oder Türschwellen überfahren werden oder die Transportroller zu schwungvoll um Kurven bewegt werden, wodurch leicht ein Abrutschen des Guts von der Plattform auftreten kann.

Um diesem Problem zu begegnen, sind Transportroller bekannt, bei denen die Oberfläche der Plattform, auf welcher der zu transportierende Behälter gestellt werden soll, einen umlaufenden Stapelrand in Art einer nach oben vorspringenden Leiste aufweist, so dass ein seitliches Verschieben des Stapelguts über den Rand hinaus verhindert wird. Bei diesen gibt es in der Praxis aber oft das Problem, dass kein optimaler Sitz der Transportbehälter auf dem Transportroller vorliegt. Dies ist insbesondere z.B. dann der Fall, wenn unterschiedliche, insbesondere unterschiedlich große oder unterschiedlich konfigurierte Transportbehälter verwendet werden. Transportbehälter mit zu großen Abmessungen stehen dann entweder auf dem Stapelrand oder werden etwa zwischen den Rändern fest eingeklemmt. Transportbehälter mit zu kleinen Abmessungen andererseits werden nur durch die Haftreibung auf der Plattform gehalten und können leicht auf diesem hin- und herrutschen, so dass sie vom Transportroller fallen können.

Weiterhin sind Transportroller bekannt, die auf einem Teil der oder auf der gesamten Transportoberfläche mit einer Anti-Rutsch-Beschichtung ausgestattet sind. Solche Anti-Rutsch-Beschichtungen bestehen zumeist aus einem thermoplastischen Elastomer, beispielsweise eine Materialkombination auf Polypropylenbasis. Dabei wird zwischen dem transportierten Gut und dem Transportroller ein höherer Reibwert erzeugt, wodurch ein verrutschsicherer Stand des Transportguts gewährleistet wird. Derartige Transportroller haben aber den Nachteil, dass sie aufgrund des verwendeten Materials im Allgemeinen teuerer in der Herstellung sind. Außerdem ist die Anti-Rutsch-Beschichtung der Materialabnutzung bzw. Verschleiß unterworfen und sie kann keine dauerhafte Lösung bereitstellen für Behälter, die universell und intensiv eingesetzt werden, wie zum Beispiel für den Transport von Gemüsekisten vom Erzeuger zur Verkaufsstelle und als Leergut zurück, die eine Lebensdauer von mehr als 5 oder 10 Jahren aufweisen sollen.

Der Erfindung liegt daher die Aufgabe zugrunde, einen robust und einfach aufgebauten Transportroller zu schaffen, der einen sicheren und gefahrlosen Transport von Transportbehältern unterschiedlicher Größe bzw. mit unterschiedlichen Abmessungen gewährleisten kann, also sozusagen universell einsetzbar ist, und der dennoch kostengünstig in der Herstellung ist.

Bei einem bekannten Transportroller gemäß JP 2006 298343 A sind in der Verlängerung von Ecken einer Trägerplatte Drehrollen oder Drehräder angeordnet, welche auf verstellbaren Leisten befestigt sind. Die Leisten sind längsdiagonal über Nuten verstellbar, welche in der Trägerplatte vorgesehen sind. Damit ist nur eine begrenzte Anpassung des Transportrollers an unterschiedliche Behälter möglich. Im Übrigen sind die Eckprofile dieses Transportrollers auch mit Haltebacken ausgerüstet.

Ein Transportroller nach der US 6,659,495 B1 weist einzelne Eckprofile auf, die beliebig auf einer Trägerplattform über klettverschlussartige Verbindungen befestigbar sind. Dadurch ergibt sich nur ein begrenzter Halt beim Transport von Gütern.

Schließlich zeigt die US 5,110,147 A einen Transportroller gemäß des Oberbegriffs von Anspruch 1 für den Transport und die Lagerung von Transportbehältern und dergleichen, mit einer Plattform mit einer Transportfläche, wobei auf der Unterseite der Plattform Räder angeordnet sind. Die Räder sind schwenkbar und drehbar gelagert. Auf der runden Transportfläche des Transportrollers sind Nuten angeordnet, in welchen Eckprofile verstellbar sind. Ferner sind Haltebacken für die Anlage am Transportbehälter vorgesehen.

Diese Aufgabe wird durch einen Transportroller mit den im Patentanspruch 1 angegebenen Merkmalen gelöst.

Demnach ist vorgesehen, dass ein Transportroller in ihrer Lage auf der Transportfläche individuell verstellbare Eckprofile aufweist, die im Bereich der Ecken des Transportrollers auf der Transportfläche angeordnet sind und Haltebacken für die Anlage an Transportbehälter aufweisen.

Durch die Vorsehung von verstellbaren Eckprofilen ergibt sich erfindungsgemäß eine Anschlageinstellung auf unterschiedliche Kastengrößen, was für den sicheren Transport der Transportbehälter erforderlich ist und die Rutschgefahr der Transportbehälter auf dem Transportroller ausschließt.

Ferner weist die Plattform einen Rand auf, der als eine abschnittsweise oder umlaufende Erhöhung in Form einer über die Transportfläche nach oben hin herausragenden Randleiste, die insbesondere als ein Stapelrand ausgebildet ist. Ein Stapelrand ist insofern auch von Vorteil, dass beim Leerguttransport mehrerer Transportroller diese aufeinander gestapelt werden können, wobei die Räder des jeweilig oberen Transportrollers von der Transportfläche des unteren Transportrollers innerhalb des Stapelrands aufgenommen werden und der obere Transportroller nicht so leicht herunterrollt bzw. fällt.

In vorteilhafter Weise können Transportbehälter durch die verstellbaren Eckprofile individuell manuell auf dem Transportroller festgeklemmt werden.

Ein besonderer Vorteil von verstellbaren Eckprofilen ist, dass die Transportbehälter von ihren Abmessungen her kleiner ausgebildet sein können als die Plattform des Transportrollers und dennoch rutschfest von dem Transportroller aufgenommen werden.

Weitere vorteilhafte Ausgestaltungen des erfindungsgemäßen Transportrollers sind durch die Merkmale in den Unteransprüchen gekennzeichnet.

Bei einer Ausführungsform des erfindungsgemäßen Transportrollers sind verstellbare Eckprofile an allen Ecken des Transportrollers ausgebildet. In vielen Fällen reicht es schon aus, dass der Benutzer ein einzelnes Eckprofil verstellt, um das zu transportierende Gut sicher auszunehmen. In der bevorzugten Ausführungsform ist es aber möglich, mehrere Eckprofile zu verstellen, um einen Klemmsitz des Transportbehälters zu erreichen. Insbesondere zur Aufnahme besonders kleiner oder auch runder Transportbehälter sind daher bevorzugt alle vier Eckprofile nach Innen verstellbar.

Bei einer Ausführungsform des erfindungsgemäßen Transportrollers sind die Eckprofile jeweils ausgehend von einer Ecke zum Inneren der Transportfläche hin, insbesondere diagonal über die Transportfläche oder in Richtung zur Mitte, verstellbar.

Bei einer Ausführungsform des erfindungsgemäßen Transportrollers sind die verstellbaren Eckprofile zusätzlich zu ihrer Verstellbarkeit zum Inneren der Transportfläche jeweils ausgehend von einer beliebigen Ecke entlang einer Seite oder entlang beider Seiten der Plattform verstellbar.

Bei einer vorteilhaften Ausführungsform des erfindungsgemäßen Transportrollers ist zumindest ein verstellbares Eckprofil mit einer Feder von einer Ecke weg zum Inneren der Transportfläche hin oder zu einer Seitenmitte hin vorgespannt. Die Feder ist dabei derart ausgebildet, dass der Benutzer das verstellbare Eckprofil gegen die Federkraft nach außen drücken kann, bis der Transportroller den Transportbehälter im Klemmsitz aufnimmt. Dabei muss sich der Benutzer nicht etwa bücken, um das verstellbare Eckprofil manuell zu betätigen und festzustellen, sondern kann beispielsweise den Transportbehälter als Hebel oder als Werkzeug benutzen, um die verstellbaren Eckenprofile gegen die Federkraft nach außen zu drücken.

Bevorzugt ist jeweils eine Haltebacke als ein Rechtwinkelprofil zur Stützung oder zum Einklemmen einer Ecke des Transportbehälters ausgebildet. Dies ist insofern vorteilhaft, dass in dem typischen Fall, wenn das zu transportierende Gut eckig ist, beispielsweise ein Transportbehälter, der eine quadratische oder rechteckige Grundfläche aufweist, die Ecken des Transportguts passend in den Haltebacken der verstellbaren Eckprofile aufgenommen werden. Dies ermöglicht einen umso festeren Sitz und Halt des Transportguts auf dem Transportroller.

In weiteren Ausführungsformen sind andere Profile der Haltebacken möglich, darunter gerade oder gebogene Wandabschnitte, Stäbe oder auch Winkelprofile mit größeren oder kleineren Winkeln als 90°. Dabei kommt es lediglich darauf an, dass sich die Haltebacken dazu eignen, die Transportbehälter auf der Transportfläche zu stützen oder einzuklemmen.

Bei einer Ausführungsform des erfindungsgemäßen Transportrollers ragen die Haltebacken des verstellbaren Eckprofils im Bereich von 0,5 cm bis 10 cm, insbesondere von 1 cm bis 10 cm, über die Transportfläche hinaus. Die Höhe ist den jeweiligen Zwecken angepasst, d.h. wenn erwartet wird, dass einzelne, hohe Transportbehälter transportiert werden, können die verstellbaren Eckprofile auch noch höher ausgebildet sein, beispielsweise zwischen 10 cm und 20 cm, um auch in diesen Fällen einen sicheren Stand zu gewährleisten.

Bei einer Ausführungsform des erfindungsgemäßen Transportrollers sind die verstellbaren Eckprofile einseitig oder beidseitig einer Ecke des Transportrollers mit Hilfe von Befestigungsmitteln in ihrer Verstellposition lösbar befestigbar. Dabei steht die Bedienbarkeit der verstellbaren Eckprofile im Vordergrund. Ein einziges, einseitig angebrachtes Befestigungsmittel ist schneller betätigt als zwei auf beiden Seiten der Ecke angeordnete Befestigungsmittel. Andererseits wird mit zwei Befestigungsmitteln unter Umständen eine stärkere Befestigung erreicht.

Bei einer Ausführungsform des erfindungsgemäßen Transportrollers drücken die Befestigungsmittel zur Fixierung eines verstellbaren Eckprofils einen Block gegen eine blockartige Leiste des verstellbaren Eckprofils, bevorzugt gegen einen Profilsteg einer blockartigen Leiste. Diese Art der Befestigung ermöglicht aufgrund vorteilhafter Kraftübertragung einen sicheren und festen Halt des verstellbaren Eckprofils in der Verstellposition.

Bei einer Ausführungsform des erfindungsgemäßen Transportrollers weist die Plattform im Bereich der Ecken Eingriffsöffnungen auf, die derart ausgebildet sind, dass Befestigungsmittel zur Feststellung bzw. zum Lösen der verstellbaren Eckprofile manuell und/oder Mittels eines Werkzeugs bedienbar sind. Die Eingriffsöffnungen sind bevorzugt ergonomisch geformt. Dies hat den Vorteil, dass dem Kasten über Abrundungen oder ähnliches ein ansprechendes Äußeres gegeben wird, und zugleich verhindert wird, dass sich der Benutzer an zu harten Kanten schneiden könnte.

Bei einer Ausführungsform des erfindungsgemäßen Transportrollers weist die Plattform vorzugsweise langgestreckte Führungsnuten in der Transportfläche auf und die verstellbaren Eckprofile sind innerhalb der Führungsnuten bewegbar bzw. verschiebbar angeordnet. Besonders bevorzugt weisen die Führungsnuten Schultern auf und die Eckprofile sind als Gleitblöcke mit T-Profil ausgebildet, die auf den Schultern der Führungsnuten verschiebbar sind.

Bei einer Ausführungsform des erfindungsgemäßen Transportrollers sind ein oder mehrere Räder bezüglich einer Achse senkrecht zur Transportfläche drehbar an dem Transportroller angeordnet, bevorzugt jeweils mittels eines Drehlagers, in dem ein Lagerblock insbesondere bezüglich der Plattform ortsfest aufgenommen ist.

Bei einer Ausführungsform des erfindungsgemäßen Transportrollers weist die Plattform unterseitig eine insbesondere in Form von Rippen oder Vorsprüngen ausgebildete Struktur zur Stabilisierung der Transportfläche auf. Solche Strukturen bieten den Vorteil, dass an diesen Stellen Material eingespart wird, was zu niedrigeren Kosten führt.

Nachfolgend werden bevorzugte Ausführungsformen des erfindungsgemäßen Transportrollers in Bezug auf die beigefügten Figuren zur Erläuterung weiterer erfindungswesentlicher Merkmale beschrieben. Es zeigen:
- Figur 1: eine perspektivische Ansicht einer ersten Ausführungsform des erfindungsgemäßen Transportrollers,
- Figur 2: eine perspektivische Ansicht einer zweiten Ausführungsform des erfindungsgemäßen Transportrollers,
- Figur 3: eine weitere perspektivische Ansicht der zweiten Ausführungsform des erfindungsgemäßen Transportrollers aus Figur 2 ohne Transportbehälter,
- Figur 4: eine perspektivische oberseitige Ansicht eines Eckbereichs eines erfindungsgemäßen Transportrollers,
- Figur 5: eine perspektivische unterseitige Ansicht eines Eckbereichs eines erfindungsgemäßen Transportrollers,
- Figur 6: eine perspektivische oberseitige Ansicht eines Eckbereichs eines erfindungsgemäßen Transportrollers, wobei Teile eines verstellbaren Eckprofils entfernt wurden,
- Figur 7: eine Draufsicht auf einen erfindungsgemäßen Transportroller,
- Figur 8: eine Schnittansicht eines Eckbereichs eines erfindungsgemäßen Transportrollers entlang der Linie B-B aus Figur 7,
- Figur 9: eine Schnittansicht eines ersten Ausführungsbeispiels eines Eckbereichs eines erfindungsgemäßen Transportrollers entlang der Linie A-A aus Figur 7,
- Figur 10: eine Schnittansicht eines zweiten Ausführungsbeispiels eines Eckbereichs eines erfindungsgemäßen Transportrollers entlang der Linie A-A aus Figur 7 und
- Figur 11: eine Schnittansicht eines dritten Ausführungsbeispiels eines Eckbereichs eines erfindungsgemäßen Transportrollers entlang der Linie A-A aus Figur 7.

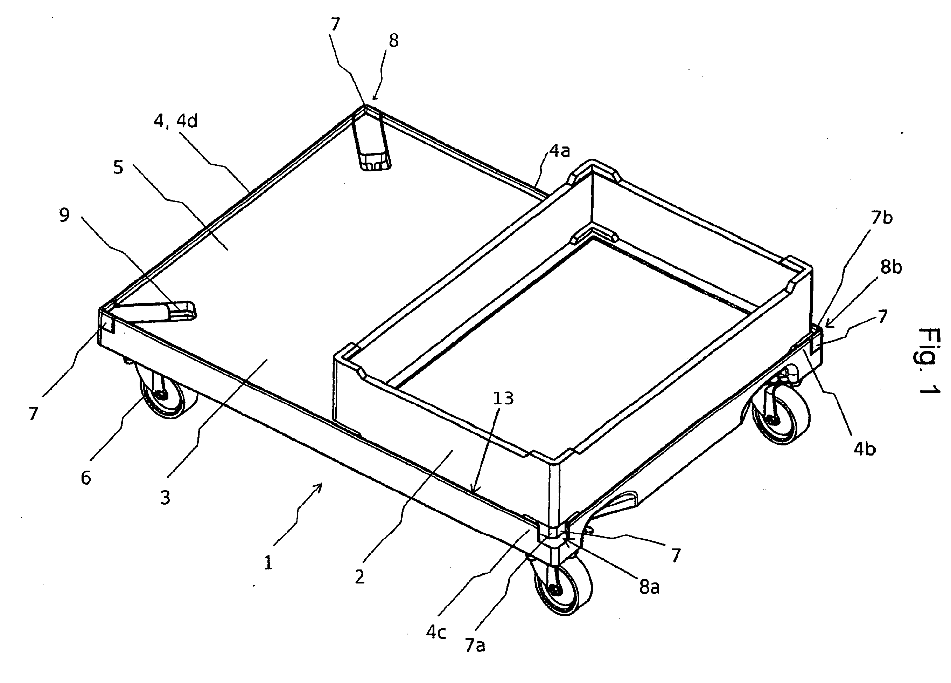

Figur 1 zeigt eine perspektivische Ansicht eines Transportrollers 1, der einen Transportbehälter 2 trägt. Der Transportroller 1 weist eine rechteckförmige Plattform 3 auf, die einen Rand 4 und eine Transportfläche 5 umfasst. Unterseitig der Plattform 3 sind in den Bereichen der Ecken 8 vier Räder 6 angeordnet.

Der Transportroller 1 weist verstellbare Eckprofile 7 auf, die an allen vier Ecken 8 des Transportrollers 1 angeordnet sind. Die verstellbaren Eckprofile 7 stehen nach oben über die Transportfläche 5 hinaus und dienen zur festen Aufnahme des Transportbehälters 2, der im dargestellten Ausführungsbeispiel eine etwas kleinere Länge aufweist, als die Transportfläche 5 breit ist. Dadurch verbleibt beim Aufsetzen des Transportbehälters 2 auf der Transportfläche 5 ein Spalt 13 zwischen dem Transportbehälter 2 und einer gegenüber der Transportfläche 5 erhöht ausgebildeten Randleiste 4c. Dadurch kann der Transportbehälter 2 auf der Transportfläche 5 rutschen, wenn der Transportroller 1 mit dem Transportbehälter 2 bewegt bzw. verschoben wird. Bei dem dargestellten erfindungsgemäßen Transportroller 1 ist jedoch ein unten abgebildetes verstellbares Eckprofil 7a um ein Stück in das Innere der Transportfläche 5 versetzt. Der Transportbehälter 2 wird auf diese Weise von dem verstellbaren Eckprofil 7a und einer gegenüber der Transportfläche 5 erhöht ausgebildeten gegenüberliegenden Randleiste 4a eingeklemmt und ein Verrutschen ist dadurch verhindert. Um den Transportbehälter 2 einzuklemmen, wäre es ebenso möglich, dass zusätzlich zu dem unteren verstellbaren Eckprofil 7a ein zweites, beispielsweise das rechts abgebildete, verstellbare Eckprofil 7b nach Innen der Transportfläche 5 versetzt ist.

Zum Zwecke des Verstellens sind die verstellbaren Eckprofile 7 in geradlinigen und langgestreckten Führungsnuten 9 verschiebbar angeordnet. Die jeweilige Führungsnut 9 erstreckt sich im dargestellten Ausführungsbeispiel ausgehend von einer Ecke 8 im Wesentlichen diagonal d.h. hier in einem Winkel von ca. 45° zu den beiden Seitenrändern der Plattform 3in das Innere der Transportfläche 5. Es sind auch Ausführungsformen der Erfindung möglich, in denen dieser Winkel anders festgelegt ist, beispielsweise zwischen 40° und 50° bezüglich eines Seitenrands 4 der Plattform 3.

Der Rand 4 ist hierbei als Stapelrand ausgebildet, d.h. auf jeder Seite des Transportrollers 1 ist eine über die Transportfläche 5 nach oben herausragende Randleiste 4a, 4b, 4c, 4d vorgesehen. Diese Leisten 4a, 4b, 4c, 4d erstrecken sich hier bis nahe an die Ecken 8, lassen aber die Ecken 8 offen. Damit ist der Rand 4 gemäß dieser Ausführungsform als abschnittsweise Erhöhung ausgebildet.

In Figur 1 sind zwei Alternativen dargestellt, wie die verstellbaren Eckprofile 7 mit den Randleisten 4a, 4b, 4c, 4d zusammenwirken können. Das rechts dargestellte Eckprofil 7b passt in die von den beiden die Ecke 8b umgebenden Randleisten 4a, 4b begrenzte Aussparung, so dass das Eckprofil 7b nach dieser Ausführungsform zusammen mit den Randleisten 4a, 4b, 4c, 4d eine um die Ecke 8b umlaufende Erhöhung bildet, wenn es, wie dargestellt, ganz nach außen versetzt ist. Das unten abgebildete Eckprofil 7a passt hingegen nicht in den Bereich der Ecke 8a, der von den beiden sie umgebenden Randleisten 4b, 4c ausgespart ist. Wenn das Eckprofil 7a nach dieser alternativen Ausführungsform ganz nach außen versetzt wird, schlägt es beidseitig an die jeweiligen Randleisten 4b, 4c an.

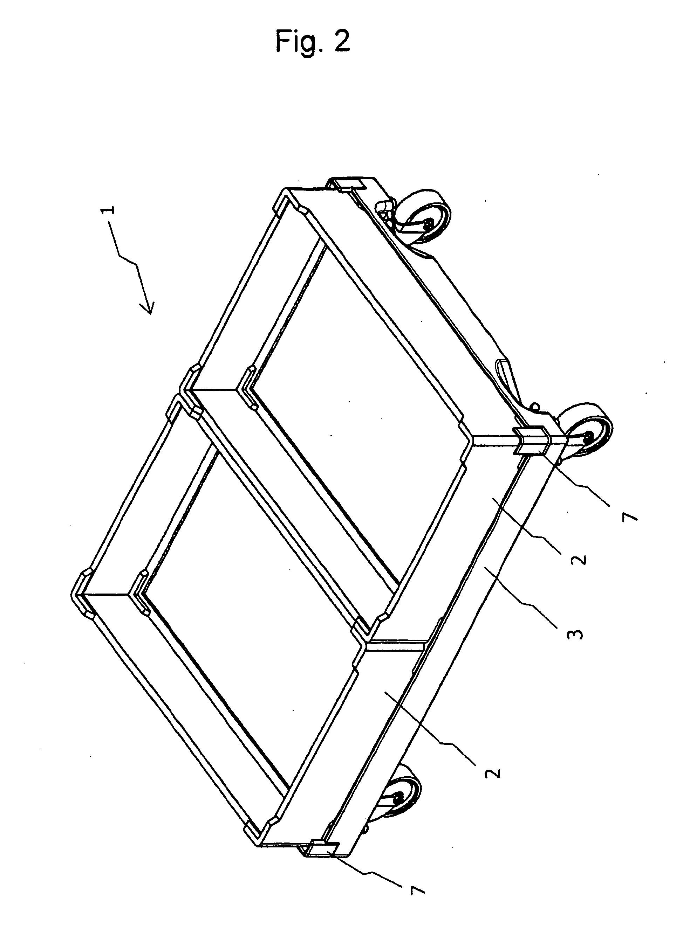

Die Erfindung bezieht sich nicht nur auf typische Transportroller 1, sondern auch auf sogenannte Kommissionierwägen, die also beispielsweise zwei Stapel von Transportbehältern 2 transportieren können, wie in Figur 1 bereits angedeutet und in Figur 2 dargestellt. Figur 2 zeigt eine weitere Ausführungsform des Transportrollers 1, der hier zwei Transportbehälter 2 aufnimmt. Die beiden Transportbehälter 2 sind von ihren Abmessungen her etwas kleiner ausgebildet als die Plattform 3, so dass ohne die erfindungsgemäßen Maßnahmen kein rutschfester Verbund zwischen den Transportbehältern 2 und der Plattform 3 bestünde. Durch die verstellbaren Eckprofile 7 werden die beiden Transportbehälter 2 auf dem Transportroller 1 festgeklemmt.

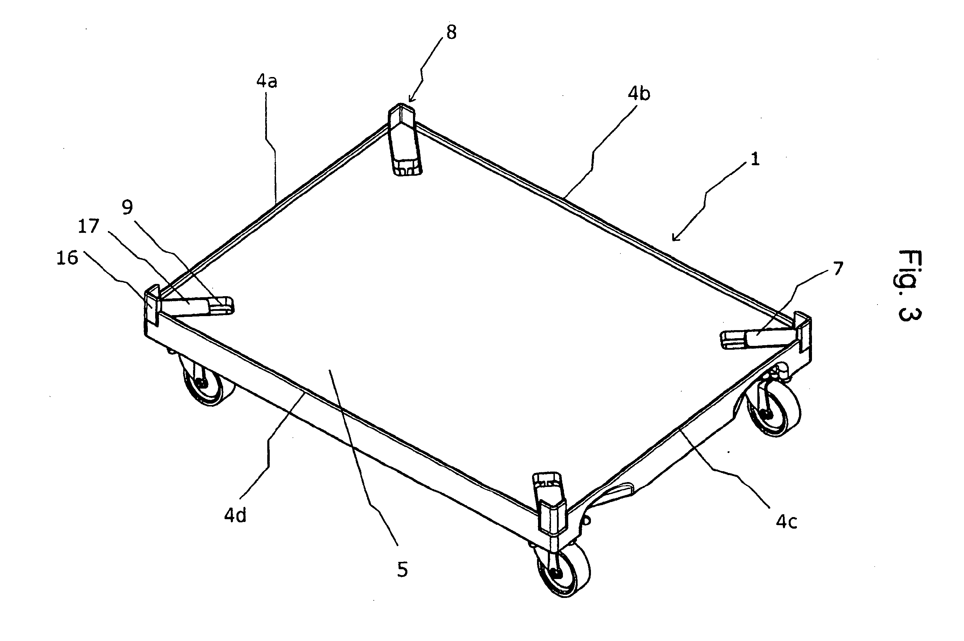

Figur 3 zeigt den erfindungsgemäßen Transportroller 1 in der Ausführungsform gemäß Figur 2 ohne die Transportbehälter. Hier ist besonders deutlich zu erkennen, dass die verstellbaren Eckprofile 7 jeweils eine Haltebacke 16 aufweisen, die senkrecht zur Transportfläche 5 angeordnet und durch ein Winkelprofil gebildet ist. Diese Haltebacke 16 steht auf einer blockartigen Leiste 17 nach oben vor, die in der Führungsnut 9 verschiebbar angeordnet ist. Das Verhältnis der länglichen Ausdehnungen der Führungsnut 9 zu den länglichen Ausdehnungen der Leiste 17 bestimmt dabei den Verstellbereich des verstellbaren Eckprofils 7. Die Haltebacken 16 sind im Bereich der Ecken 8 des Transportrollers 1 gegenüber der Transportfläche 5 als Rechtwinkelprofile zur Stützung oder zum Einklemmen einer Ecke des Transportbehälters 2 ausgebildet.

Die Haltebacken 16 sind in dieser Ausführungsform der Erfindung sowohl gegenüber der Transportfläche 5 als auch gegenüber den Randleisten 4a, 4b, 4c, 4d der Plattform 3 erhöht. Vorzugsweise ragen die Haltebacken 16 der verstellbaren Eckprofile 7 im Bereich von 0,5 bis 10 cm über die Transportfläche 5 nach oben hervor. Der Rand 4 ist demgegenüber abschnittsweise als geringfügige Erhöhung gegenüber der Transportfläche 5 bzw. als Stapelrand ausgebildet. In der Ausführungsform gemäß Figur 1 fluchten die Höhe der verstellbaren Eckprofile 7 und des Randes 4, bzw. der Randleisten 4a, 4b, 4c, 4d ineinander, d. h. sie sind einander gleich.

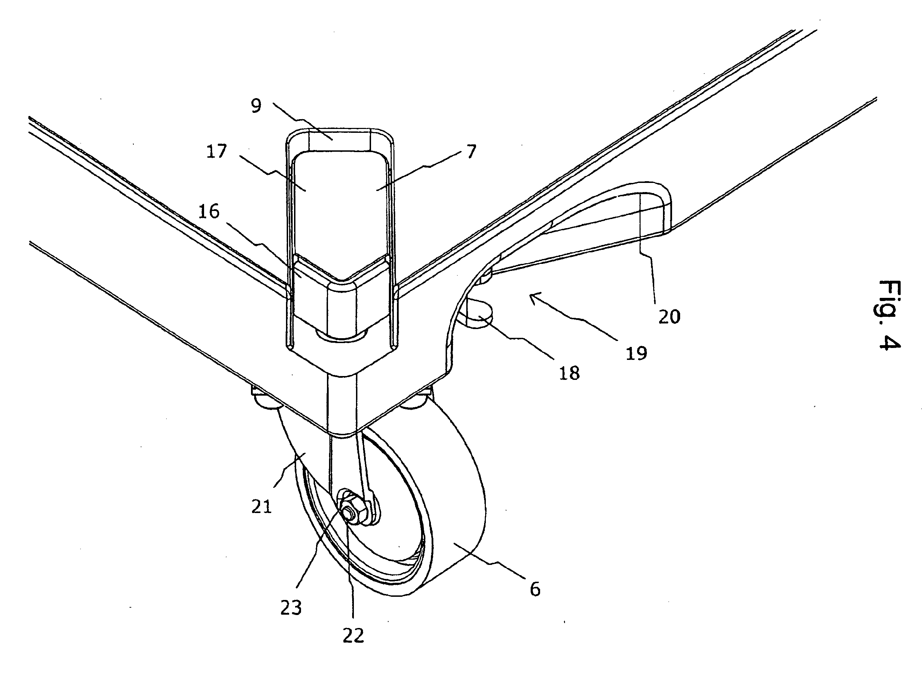

Figur 4 zeigt eine vergrößerte Darstellung einer Ausführungsform eines Eckbereichs des Transportrollers 1. Deutlich ist in dieser Ausführungsform zu sehen, dass die verstellbaren Eckprofile 7 seitlich mit Hilfe von Befestigungsmitteln 18 in ihrer entsprechend in Anpassung auf den zu sichernden Transportbehälter eingestellten Lage fixiert werden. Zu diesem Zweck ist eine Ausnehmung oder Eingriffsöffnung 19 am Rand 4 der Plattform 3 vorgesehen, in welche das Befestigungsmittel 18 eingreift. Die Eingriffsöffnung 19 ist in Art einer Einbuchtung in der Plattform 3 ausgebildet und wird während des Spritzgießens bei der Herstellung des Transportrollers 1 mit eingeformt.

Zur angenehmen Handhabung des Befestigungsmittels 18 ist ein abgerundeter Bereich 20 vorgesehen, als Übergang des Randes 4 der Plattform 3 zur Eingriffsöffnung 19.

Weiterhin ist zu erkennen, wie ein Rad 6 unterhalb der Plattform 3 in einem Lagerblock 21 aufgenommen ist. Dargestellt ist eine Ausführungsform, in der das Rad 6 mit einer Schraube 22 und einer Mutter 23 in dem Lagerblock 21 gelagert ist. Da die Räder 6 durch die meist hohen zu tragenden Lasten und stoßartigen Beanspruchungen, z.B. beim Überfahren von Türschwellen oder beim Leertransport starken Belastungen ausgesetzt sind, werden bevorzugt Kugellager aus metallischen Werkstoffen für die Räder 6 verwendet, die für diese Belastungen ausgelegt sind. Alternative Ausführungsformen der Radlagerung sind natürlich möglich, die aus dem Stand der Technik gut bekannt sind.

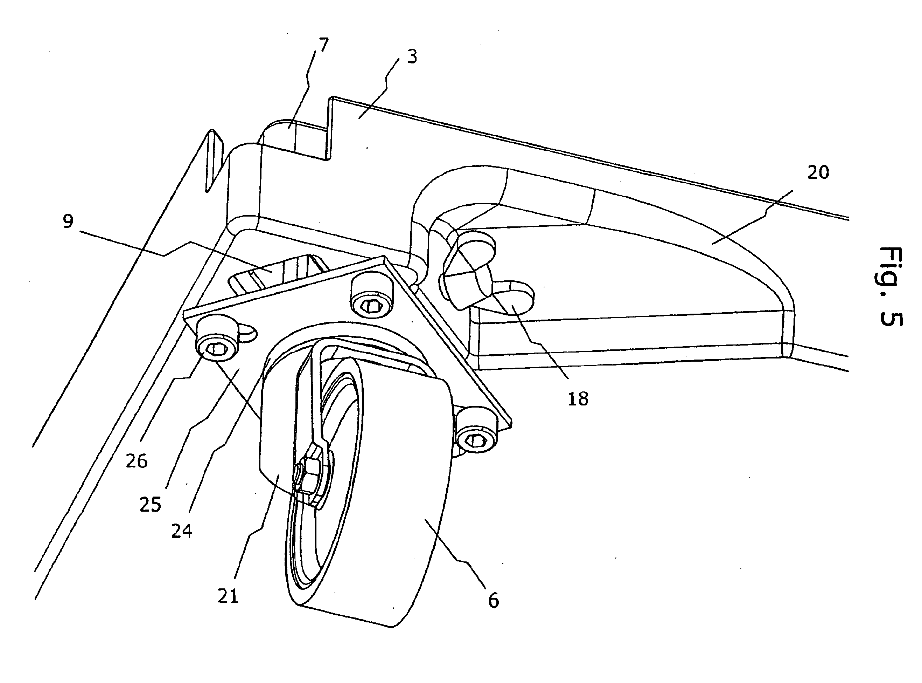

Figur 5 zeigt eine unterseitige Perspektive des Eckbereichs aus Figur 4. Gezeigt ist die unterseitige, ortsfeste Befestigung des Rades 6 an der Plattform 3. In einer Ausführungsform sind alle Räder 6 gegenüber der Plattform 3 drehbar angeordnet. In einer alternativen Ausführungsform des Transportrollers 1 können zwei der vier Räder 6 auch starr gegenüber der Plattform 3 ausgebildet sein. Zur drehbaren Lagerung des Rades 6 wird der als Drehblock ausgebildete Lagerblock 21 in einem Drehlager 24 aufgenommen, wodurch das Rad 6 um eine senkrecht zur Transportfläche 5 verlaufende Achse drehbar an dem Transportroller 1 befestigt ist. Das Drehlager 24 ist dabei als ein Teil einer Befestigungsplatte 25 ausgebildet, die mit Hilfe von Befestigungsmitteln, insbesondere Schrauben 26 an der Unterseite der Plattform 3 befestigt ist. Die Führungsnut 9 zur Aufnahme des verstellbaren Eckprofils 7 ist hier als eine Durchgangsöffnung durch die Plattform 3 ausgebildet. Sie ist teilweise von der Befestigungsplatte 25 des Rades 6 überdeckt.

Das Befestigungsmittel 18 ist gemäß dieser Ausführungsform des erfindungsgemäßen Transportrollers 1 als eine Flügelschraube oder eine Flügelmutter ausgebildet und greift einseitig, hier dargestellt von rechts, an das verstellbare Eckprofil 7 an. Das Befestigungsmittel 18 ist bequem manuell oder mit Hilfe eines Werkzeugs bedienbar und lösbar befestigbar. In alternativen Ausführungen sind an beiden Seiten der Ecke 8 des Transportrollers 1 Eingriffsöffnungen 19 und Befestigungsmittel 18 vorgesehen, wodurch ebenfalls ein fester Halt des verstellbaren Eckprofils 7 erreicht wird.

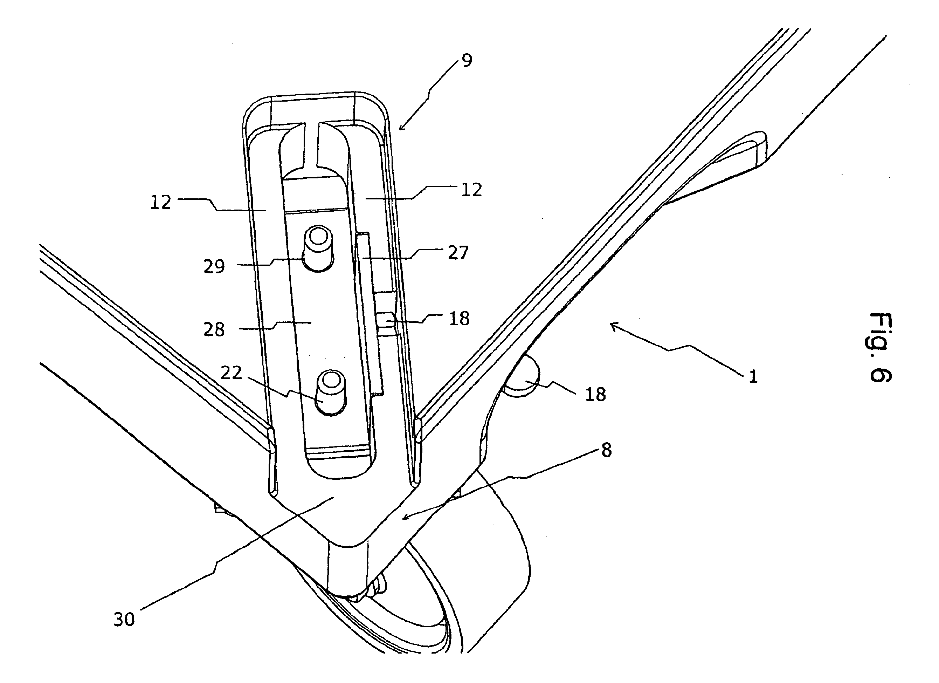

Figur 6 zeigt dieselbe vergrößerte Darstellung des Eckbereichs der wie Figur 4, jedoch ohne die blockartige Leiste 17 mit der Haltebacke 16. Dadurch wird erkennbar, wie das Befestigungsmittel 18 das verstellbare Eckprofil 7 arretiert. Dazu drückt die Flügelschraube 18 einen Block 27 seitlich gegen die nicht dargestellte blockartige Leiste 17 des verstellbaren Eckprofils 7. Da die Flügelschraube 18 eine relativ kleine Querschnittsfläche aufweist, und dadurch Druck quasi punktuell übertragen wird, ermöglicht die Anordnung des Blocks 27 eine vergrößerte Kraftübertragungsfläche, so dass das verstellbare Eckprofil 7 nicht so stark punktuell mechanisch beansprucht wird. Daher besteht das verstellbare Eckprofil 7 bevorzugt aus Plastik, wohingegen der Block 27 sowohl aus Plastik als auch aus Metall bestehen kann, was zu einer Verringerung des Gewichts des Transportrollers 1 führt.

Die blockartige Leiste 17 des verstellbaren Eckprofils 7, die in Figur 6 nicht dargestellt ist, wird über Befestigungsmittel 29 mit einer Trägerplatte 28 verbunden. Zur Aufnahme und beweglichen Lagerung der blockartigen Leiste 17 weist die Führungsnut 9 Schultern 12 auf. Die verstellbaren Eckprofile 7 sind also abgesehen von den Haltebacken 16 mit anderen Worten als Gleitblöcke mit T-Profil ausgebildet, die auf den Schultern 12 der Führungsnuten verschiebbar sind.

Das verstellbare Eckprofil 7 ist in der Führungsnut 9 in Längsrichtung beweglich, wobei die Bewegungsfreiheit zur Ecke 8 des Transportrollers 1 durch den Anschlag der Trägerplatte 28 und/oder der blockartigen Leiste 17 an einen Eckblock 30 der Plattform 3 begrenzt ist.

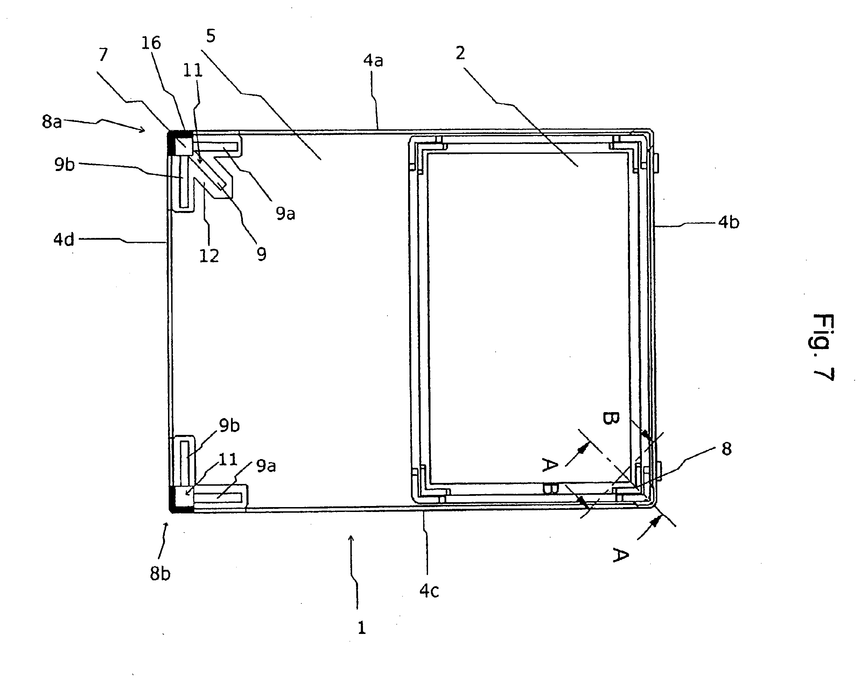

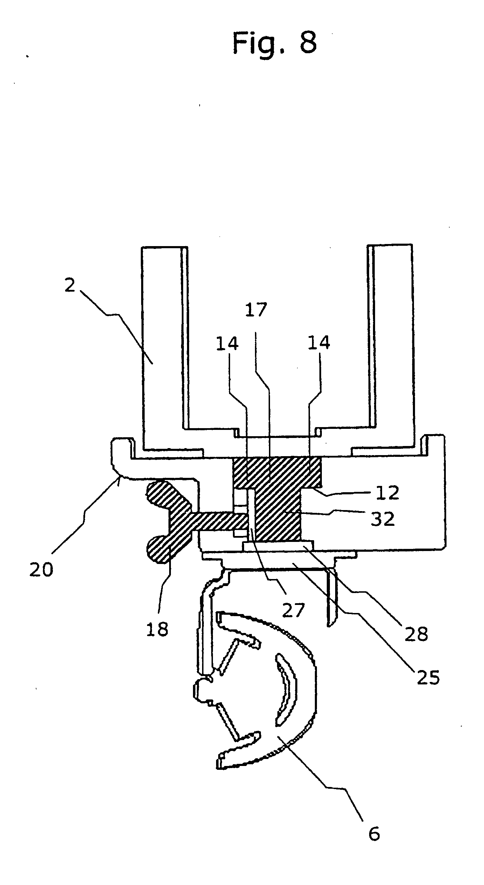

Figur 7 zeigt eine Draufsicht auf den Transportroller 1 und dient insbesondere zur Veranschaulichung der Ansichten aus den Figuren 8, 9, 10 und 11, sowie zur Darstellung besonderer Ausführungsformen der Erfindung.

Gemäß der in der Ecke 8a in Figur 7 dargestellten Ausführungsform sind in der Transportfläche 5 drei sich treffende Führungsnuten 9, 9a, 9b angeordnet. Eine Führungsnut 9 verläuft wie jene aus den Darstellungen der Figuren 1 - 6, nämlich diagonal oder in einem 45°-Winkel von der Ecke 8 ausgehend in Richtung des Inneren der Transportfläche 5. Die beiden weiteren Führungsnuten 9a, 9b verlaufen jeweils parallel zu einer die Ecke 8a begrenzenden Seite, bzw. parallel zu einer der entsprechenden Randleisten 4a, 4d. Das verstellbare Eckprofil 7 ist in einem durch die drei Führungsnuten 9, 9a, 9b definierten Bereich 11 verschiebbar. Dabei gleitet die blockartige Leiste 17 des verstellbaren Eckprofils 7 auf den Schultern 12 der entsprechenden Führungsnut 9, 9a, 9b. Die Haltebacken 16 des verstellbaren Eckprofils 7 sind in dieser Darstellung zur Deutlichkeit hervorgehoben.

Gemäß der in der Ecke 8b in Figur 7 dargestellten Ausführungsform sind zwei parallel zu den Randleisten 4c, 4d bzw. zu den Seiten der Plattform 3 verlaufende Führungsnuten 9a, 9b vorgesehen. Das verstellbare Eckprofil 7 ist daher in dem durch die beiden Führungsnuten 9a, 9b definierten Bereich 11 jeweils entlang des Randes 4 der Plattform 3 verstellbar.

In weiteren Ausführungsformen der Erfindung sind die verschiedenen Ausführungsformen der Führungsnuten 9, 9a, 9b, d.h. in das Innere verlaufend oder parallel zu einer begrenzenden Seitenwand, auch auf andere Weise miteinander kombinierbar.

In noch weiteren Ausführungsformen der Erfindung ist lediglich eine Führungsnut 9a, 9b vorgesehen, die parallel zu einer die Ecke 8 begrenzenden Seitenwand, d.h. parallel zu einer der entsprechenden Randleisten 4a, 4b, 4c oder 4d verläuft. In diesem Fall ist es von Vorteil, wenn die Haltebacke 16 kein Rechtwinkelprofil aufweist sondern lediglich aus einem einfachen aus der Transportfläche 5 herausragenden geraden Wandstück oder beispielsweise aus einem Stab besteht.

Figur 8 zeigt einen Schnitt gemäß der Linie B-B aus Figur 7. Wiederum ist deutlich der abgerundete Bereich 20 zu sehen, der den Zugriff auf die Flügelschraube 18 erleichtert, sowie der auf der Transportfläche 5 angeordnete Transportbehälter 2. Weiterhin ist dargestellt, auf welche Weise die schraffiert dargestellte Flügelschraube 18 das verstellbare Eckprofil 7 fixiert. Wie auch schon aus Figur 6 ersichtlich, erfolgt die Kraftübertragung in vorteilhafter Weise über den Block 27. Die blockartige Leiste 17 ist im Querschnitt mit einem T-förmigen Profil ausgebildet (schraffiert dargestellt) und der Block 27 drückt gegen einen Profilsteg 32 des T-förmigen Profils. Weiterhin ist eine Schulter 12 der Führungsnut 9 erkennbar, auf der einer der beiden anderen Profilstege 14 des T-förmigen Profils der blockartigen Leiste 17 gleitet.

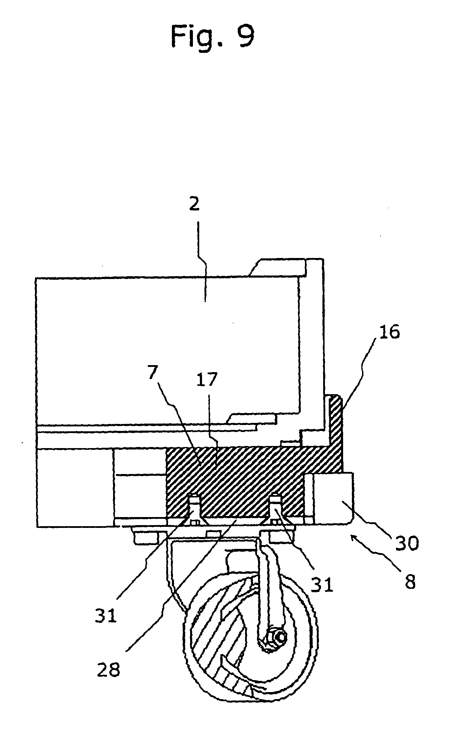

Figur 9 ist eine Schnittansicht entlang der Linie A-A aus Figur 7, also im 45°-Winkel von einer Ecke 8 ausgehend in das Innere eines weiteren Ausführungsbeispiels des Transportrollers 1, auf dem der Transportbehälter 2 steht.

Dargestellt ist eine mögliche Befestigung des verstellbaren Eckprofils 7 an die Trägerplatte 28, wobei die Trägerplatte 28 die Vorrichtung zur Radaufhängung von dem verstellbaren Eckprofil 7 trennt. Die Befestigung der blockartigen Leiste 17 erfolgt gemäß dieser Ausführungsform mittels Schrauben 31, die von unten durch die Trägerplatte 28 in die blockartige Leiste 17 eingeführt sind. Die Bewegungsfreiheit des verstellbaren Eckprofils 7 ist nach außen durch ihren Anschlag an den Eckblock 30 der Plattform 3 begrenzt.

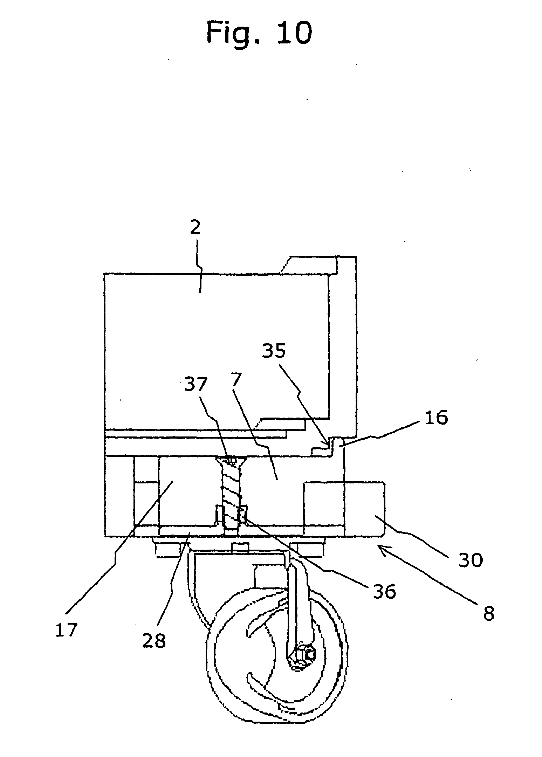

Figur 10 ist eine Schnittansicht entlang der Linie A-A aus Figur 7, also im 45°-Winkel von einer Ecke 8 ausgehend in das Innere eines weiteren Ausführungsbeispiels des Transportrollers 1, auf dem der Transportbehälter 2 steht. Das verstellbare Eckprofil 7 ist um ein Stück nach Innen versetzt und die Haltebacke 16 des verstellbaren Eckprofils 7 wirkt mit einer nach Innen des Transportbehälters 2 versetzten Randkante 35 des Transportbehälters 2 zusammen, so dass dieser auf dem Transportroller 1 gehalten wird.

Dargestellt ist weiterhin eine weitere alternative mögliche Befestigung des verstellbaren Eckprofils 7 an die Trägerplatte 28, nämlich mittels einer Schraube 37, die von oben in die blockartige Leiste 17 des verstellbaren Eckprofils 7 eingeführt ist. Die Schraube 37 kann natürlich unterseitig mit einer Mutter gekontert sein oder wie dargestellt mit der Trägerplatte 28 zusammenwirken, die zu diesem Zweck einen Flanschabschnitt 36 aufweist.

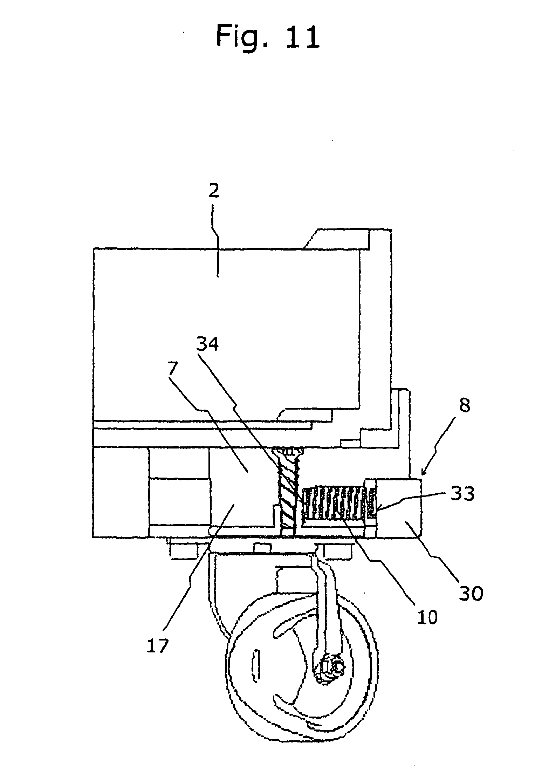

Figur 11 ist eine Schnittansicht entlang der Linie A-A aus Figur 7, also im 45°-Winkel von einer Ecke 8 ausgehend in das Innere eines weiteren Ausführungsbeispiels des Transportrollers 1, auf dem der Transportbehälter 2 angeordnet ist. In diesem Ausführungsbeispiel ist das verstellbare Eckprofil 7 mittels einer Feder 10 vorgespannt.

Die Feder 10 ist zwischen einem Ansatz 33 der Plattform 3, welcher sich an der Innenseite des Eckblocks 30 befindet, und einem Ansatz 34, der ungefähr in der Mitte in der blockartigen Leiste 17 des verstellbaren Eckprofils 7 angeordnet ist, angeordnet. Daher ist in dieser Ausführungsform die blockartige Leiste 17 mit einer Aussparung versehen zur Aufnahme der Feder 10 oder eines Teils der Feder 10.

In Figur 11 ist die Feder 10 gespannt dargestellt und in Ruhelage der Feder 10 (nicht dargestellt) ist das verstellbare Eckprofil 7 aufgrund der Federkraft in das Innere der Transportfläche 5 (links in Figur 11) vorgespannt. Ein Spannen der Feder 10 bewirkt, dass das verstellbare Eckprofil 7 in Richtung der Ecken 8 des Transportrollers 1 bzw. zu dem Äußeren der Transportfläche 5 hin versetzt wird.

In der Praxis wird die Feder 10 so lange gespannt, d.h. das verstellbare Eckprofil 7 wird so weit nach außen versetzt, bis es zu einem Kraftschluss zwischen dem verstellbaren Eckprofil 7 und dem Transportbehälter 2 kommt. Aufgrund des Kraftschlusses wird letzterer auf der Transportfläche 5 festgehalten.

In einer Weiterbildung der Ausführungsform der Erfindung, bei der die verstellbaren Eckprofile 7 mit der Feder 10 vorgespannt sind, weist der Transportroller 1 weitere Merkmale auf, die im Zusammenhang mit anderen Ausführungsformen der Erfindung beschrieben wurden. Insbesondere können auch Befestigungsmittel 18 zur Fixierung des verstellbaren Eckprofils 7 vorgesehen sein. Somit kann in einer Ausführungsform der Erfindung das verstellbare Eckprofil 7 bei gespannter Feder 10 arretiert und gelöst werden. Weiterhin können die verstellbaren Eckprofile 7 auch mittels entsprechenden Federn 10 entlang der Seiten des Transportrollers 1 vorgespannt sein, wie in Figur 7 dargestellt. In diesem Fall erfolgt die Vorspannung analog von den jeweiligen Ecken 8 weg in Richtung zu den Seitenmitten hin.

## Patentansprüche

1. Transportroller zum Transport und zur Lagerung von Transportbehältern (2) und anderem Transportgut, umfassend eine Plattform (3) mit einer Transportfläche (5) und auf der Unterseite der Plattform (3) angeordneten Rädern (6), die in Lagerblöcken (21) drehbar und schwenkbar gelagert sind, welche unterhalb der Plattform (3) in deren Eckbereichen befestigt sind, wobei der Transportroller auf der Transportfläche (5) individuell und unabhängig von unter der Plattform angeordneten Rädern (6) längs in der Plattform (3) angeordneten Nuten (9) verstellbare Eckprofile (7) aufweist und Haltebacken (16) für die Anlage am Transportbehälter (2), wobei die Nuten (9) sich zum Inneren der Transportfläche (5) in Richtung zur Mitte erstrecken, **dadurch gekennzeichnet, dass** die Plattform (3) eckig ausgeführt ist, und dass die Räder (6), Nuten (9) und Eckprofile (7) in den Eckbereichen angeordnet sind, und dass der Transportroller (1) auf jeder Seite eine über die Transportfläche (5) nach oben hin herausragende Randleiste (4a - 4d) aufweist.

2. Transportroller nach Anspruch 1, **dadurch gekennzeichnet, dass** die Nuten (9) sich jeweils diagonal in Richtung zur Mitte erstrecken.

3. Transportroller gemäß Anspruch 1 oder 2, **dadurch gekennzeichnet, dass** die verstellbaren Eckprofile (7) jeweils ausgehend von einer Ecke (8) entlang einer Seite oder entlang beider Seiten der Plattform (3) verstellbar sind.

4. Transportroller gemäß einem der vorhergehenden Ansprüche, **dadurch gekennzeichnet, dass** zumindest ein verstellbares Eckprofil (7) insbesondere mit einer Feder (10) nach Innen zu oder zu einer Seitenmitte hin vorgespannt ist.

5. Transportroller gemäß einem der vorhergehenden Ansprüche, **dadurch gekennzeichnet, dass** die Haltebacken (16) als Rechtwinkelprofile zur Stützung oder zum Einklemmen jeweils einer Ecke des Transportbehälters (2) ausgebildet sind.

6. Transportroller gemäß Anspruch 5, **dadurch gekennzeichnet, dass** die Haltebacken (16) der verstellbaren Eckprofile (7) im Bereich von 0,5 bis 10 cm über die Transportfläche (5) herausragen.

7. Transportroller gemäß einem der vorhergehenden Ansprüche, **dadurch gekennzeichnet, dass** zumindest ein verstellbares Eckprofil (7) einseitig oder beidseitig einer Ecke (8) des Transportrollers (1) mit Hilfe von Befestigungsmitteln (18) lösbar in der Verstellposition befestigbar ist.

8. Transportroller gemäß Anspruch 7, **dadurch gekennzeichnet, dass** die Plattform (3) im Bereich der Ecken (8) Eingriffsöffnungen (19) aufweist, die derart ausgebildet sind, dass die Befestigungsmittel (18) manuell und/oder Mittels eines Werkzeugs bedienbar sind.

9. Transportroller gemäß einem der vorhergehenden Ansprüche, **dadurch gekennzeichnet, dass** die Plattform (3) vorzugsweise langgestreckte Führungsnuten (9) in der Transportfläche (5) aufweist, und dass die verstellbaren Eckprofile (7) innerhalb der Führungsnuten (9) bewegbar bzw. verschiebbar angeordnet sind.

10. Transportroller gemäß einem der vorhergehenden Ansprüche, **dadurch gekennzeichnet, dass** zumindest ein Rad (6) drehbar an dem Transportroller (1) angeordnet ist, insbesondere mittels eines Drehlagers (24), in dem ein Lagerblock (21) insbesondere bezüglich der Plattform (3) ortsfest aufgenommen ist.

11. Transportroller gemäß einem der vorhergehenden Ansprüche, **dadurch gekennzeichnet, dass** die Plattform (3) einen Rand (4) aufweist, der als eine abschnittsweise oder umlaufende Erhöhung und insbesondere als ein Stapelrand ausgebildet ist.

## Claims

1. A trolley for transporting and supporting transport containers (2) and other transported goods, comprising: a platform (3) with a transport surface (5) and wheels (6) arranged on a bottom side of the platform (3), wherein the wheels are rotatably and pivotably supported in support blocks (21) which are attached below the platform (3) in corner portions of the platform (3), wherein, individually and independently of the wheels (6) arranged under the platform along grooves (9) arranged in the platform (3), the trolley includes adjustable corner profiles (7) and support bars (16) on the transport surface (5) for contacting a transport container (2), wherein the grooves (9) extend towards an interior of the transport surface (5) in a direction towards a center, **characterized in that** the platform (3) is angular shaped and that the wheels (6), grooves (9) and corner profiles (7) are arranged in the corner portions and that the trolley (1) includes an edge bar (4a - 4d) protruding upward beyond the transport surface (5).

2. The trolley according to claim 1, **characterized in that** the grooves (9) extend respectively diagonal in a direction towards the center.

3. The trolley according to claim 1 or 2, **characterized in that** the adjustable corner profiles (7) are respectively adjustable starting from a corner (8) along one side or along both sides of the platform (3).

4. The trolley according to one of the preceding claims, **characterized in that** at least one adjustable corner profile (7) is preloaded towards the interior or towards a side center, in particular through a spring (10).

5. The trolley according to one of the preceding claims, **characterized in that** the support bars (16) are configured as rectangular profiles for supporting or clamping one respective corner of the transport container (2).

6. The trolley according to claim 5, **characterized in that** the support bars (16) of the adjustable corner profiles (7) protrude beyond the transport surface (5) by 0.5 cm to 10 cm.

7. The trolley according to one of the preceding claims, **characterized in that** at least one adjustable corner profile (7) is attachable on one side or on both sides of a corner (8) of the trolley (1) through attachment devices (18) in a disengageable manner in an adjusted position.

8. The trolley according to claim 7, **characterized in that** the platform (3) includes engagement openings (19) in the portion of the corners (8), wherein the engagement openings are configured so that the attachment devices (18) are operable manually and/or through a tool.

9. The trolley according to one of the preceding claims, **characterized in that** the platform (3) preferably includes elongated support grooves (9) in the transport surface (5) and wherein the adjustable corner profiles (7) are arranged moveably or slideably within the support grooves (9).

10. The trolley according to one of the preceding claims, **characterized in that** at least one wheel (6) is rotatably supported at the trolley (1), in particular through a rotating bearing (24) in which a support block (21) is received fixated in place with respect to the platform (3).

11. The trolley according to one of the preceding claims, **characterized in that** the platform (3) includes an edge (4) which is configured as a sectional or circumferential upward protrusion and which is in particular configured as a stacking edge.

## Revendications

1. Transporteur à roues pour transporter et stocker des conteneurs de transport (2) et autre marchandise à transporter, ledit transporteur comportant un plateau (3) présentant une surface de transport (5) et des roues (6) qui sont disposées du côté inférieur du plateau (3) et qui sont montées, de manière à pouvoir tourner et pivoter, dans des blocs formant paliers qui sont fixés au-dessous du plateau (3) dans les régions angulaires de celui-ci, le transporteur à roues comportant sur la surface de transport (5), individuellement et indépendamment des roues (6) disposées au-dessous du plateau, des profilés angulaires (7) déplaçables le long de gorges (9) ménagées dans le plateau (3) et des mâchoires de retenue (16) destiné à venir en appui sur le conteneur de transport (2), les gorges (9) s'étendant vers intérieur de la surface de transport (5) en direction du milieu, **caractérisé en ce que** le plateau (3) présente une conformation polygonale, et **en ce que** les roues (6), les gorges (9) et des profilés angulaires (7) sont disposés dans les régions angulaires, et **en ce que** le transporteur à roues (1) comporte de chaque côté une baguette de bordure (4a-4d) saillant vers le haut sur la surface de transport (5).

2. Transportant à roues selon la revendication 1, **caractérisé en ce que** les gorges (9) s'étendent chacune diagonalement en direction du milieu.

3. Transporteur à roues selon la revendication 1 ou 2, **caractérisé en ce que** les profilés angulaires déplaçables (7) sont déplaçables le long d'un côté ou le long des deux côtés du plateau (3) à partir d'un coin (8).

4. Transporteur à roues selon l'une des revendications précédentes, **caractérisé en ce que** au moins un profilé angulaire déplaçable (7) est précontraint, notamment au moyen d'un ressort (10), vers l'intérieur ou vers le milieu d'un côté.

5. Transporteur à roues selon l'une des revendications précédentes, **caractérisé en ce que** les mâchoires de retenue (16) sont conformées en profilés rectangulaires destinés chacun à venir en appui sur ou serrer un coin du conteneur de transport (2).

6. Transporteur à roues selon la revendication 5, **caractérisé en ce que** les mâchoires de retenue (16) des profilés angulaires déplaçables (7) font saillie de l'ordre de 0,5 à 10 cm au-dessus de la surface de transport (5).

7. Transporteur à roues selon l'une des revendications précédentes, **caractérisé en ce que** au moins un profilé angulaire déplaçable (7) peut être immobilisé de façon amovible dans la position de déplacement, d'un côté ou des deux côtés d'un coin (8) du transporteur à roues (1), à l'aide de moyens de fixation (18).

8. Transporteur à roues selon la revendication 7, **caractérisé en ce que** le plateau (3) comporte au niveau des coins (8) les ouvertures d'engagement (19) qui sont conformées de telle sorte que les moyens de fixation (18) peuvent être maniés manuellement et/ou au moyen d'un outil.

9. Transporteur à roues selon l'une des revendications précédentes, **caractérisé en ce que** le plateau (3) comporte de préférence des gorges de guidage (9) allongées longitudinalement et ménagées dans la surface de transport (5), et **en ce que** les profilés angulaires déplaçables (7) sont disposés de façon à pouvoir se déplacer ou coulisser à l'intérieur des gorges de guidage (9).

10. Transporteur à roues selon l'une des revendications précédentes, **caractérisé en ce que** au moins une roue (6) est disposée de façon à pouvoir tourner au niveau du transporteur à roues (1), notamment au moyen d'un palier rotatif (24) dans lequel un bloc formant palier (21) est reçu de façon fixe notamment par rapport au plateau (3).

11. Transporteur à roues selon l'une des revendications précédentes, **caractérisé en ce que** le plateau (3) comporte un rebord (4) qui est conformé en saillie s'étendant sur toute la périphérie ou par portions et notamment en rebord d'empilage.
